# EUROPEAN PATENT SPECIFICATION

(11) **EP 2 732 702 B1**
(45) Date of publication and mention of the grant of the patent: **24.07.2019**
(21) Application number: 13193729.4
(22) Date of filing: 20.11.2013
(51) Int. Cl.: A01L 1/02

(54) **Horseshoe**
Hufeisen
Fer à cheval

(30) Priority: 20.11.2012 NL 2009839
(43) Date of publication of application: 21.05.2014
(73) Proprietor: Geurts, Huup, 5441 PR Oeffelt (NL)
(72) Inventor: Geurts, Huup, 5441 PR Oeffelt (NL)
(74) Representative: Verhees, Godefridus Josephus Maria

(56) References cited:
- US-A- 259 630
- US-A- 483 537
- US-A- 804 839
- US-A- 6 082 462

## Description

### Field of the invention

The invention relates to a horseshoe comprising a C-shaped metal plate having two extreme ends which are located at the rear side of the hoof during use, a middle segment which is located at the front side of the hoof during use and two side segments located between the extreme ends and the middle segment, as well as a top side with which the horseshoe is attached to a hoof during use and a bottom side which forms the bearing surface, which top side is planar and which metal plate has a thickness as well as a width, where in and near the middle the middle segment over its full width is thinner than the side segments, wherein seen in side view, from the middle of the front side over a distance, the horseshoe has a convex shape at the bottom side.

### State of the art

A horseshoe of this type is known from US-A-6082462. The known horseshoe, after being attached to the hoof, is first to be broken in before the horse walks well on it. During use the hoof wears, so that the new horseshoe needs replacing after several months.

### Summary of the invention

It is an object of the invention to provide a horseshoe according to claim 1 with which a horse immediately walks pleasantly and which does not need to be broken in first. For this purpose the horseshoe according to the invention is characterized in that, seen in side view, from the front side in the middle over a distance at least equal to the width of the horseshoe, the horseshoe is thinner than the adjoining side segments, and in that the thickness gradually increases from the front side onward. Worded differently: the distance from the planar top side to the bottom side is smaller in the middle over the entire width of the middle segment than in the place of the side segments, so that the bottom side of the middle forms a toe-off plane over which the horseshoe toes off during a horse's walk and less wear of the horseshoe is experienced. A planar top side is meant to be understood as the top side extending in a flat plane without any curvature. It has turned out that a horse shod with such horseshoes immediately feels fine when walking because the pressure in the centre of the hoof is less at the front side than with the known horseshoe.

It should be observed that from US-A-259630 is known a horseshoe whose entire top side and entire bottom side are planar and are disposed at an angle relative to each other, so that the horseshoe seen in side view has a wedge-like appearance.

An embodiment of the horseshoe according to the invention is characterized in that, seen in side view, the bottom side has the shape of or substantially the shape of an arc of circle, where the angle between the top side of the horseshoe and the tangent at the bottom side at a spot at a distance from the front side equaling half the width of the horseshoe in the place of the middle, is less than 30 degrees. The toe-off surface curved in this way has an optimal shape while the horse has an optimal feeling and minimal wear of the horseshoe occurs.

Preferably, seen in front view, the bottom side of the middle segment has a concave shape so that there is a gradual transition leading to less strain in the hoof during use.

The effects discussed above are optimal if the thin segment extends from the middle of the front side to both sides at an angle of approximately 30 degrees.

A further embodiment of the horseshoe according to the invention is characterized in that the side segments have holes in them for horseshoe nails while the middle segment extends at least between the front holes present in the side segments.

Still a further embodiment of the horseshoe according to the invention is characterized in that the width of the middle segment exceeds the width of the side segments so that the weight of the horseshoe is spread evenly over the entire hoof.

Preferably, the width gradually increases from the side segments to the middle. Furthermore, preferably the surfaces of the cross sections of the middle segment and of the side segments are equally large or substantially equally large, so that the weight of the horseshoe is spread evenly over the length in a still better way.

### Brief description of the drawings

The invention will now be described in more detail based on an example of embodiment of the horseshoe according to the invention while reference is made to the appended drawings, in which:
Fig. 1 shows an embodiment of the horseshoe according to the invention in plan view;
Fig. 2 shows the horseshoe in front view;
Fig. 3 shows the horseshoe in rear view; and
Fig. 4 shows the horseshoe in side view.

### Detailed description of the drawings

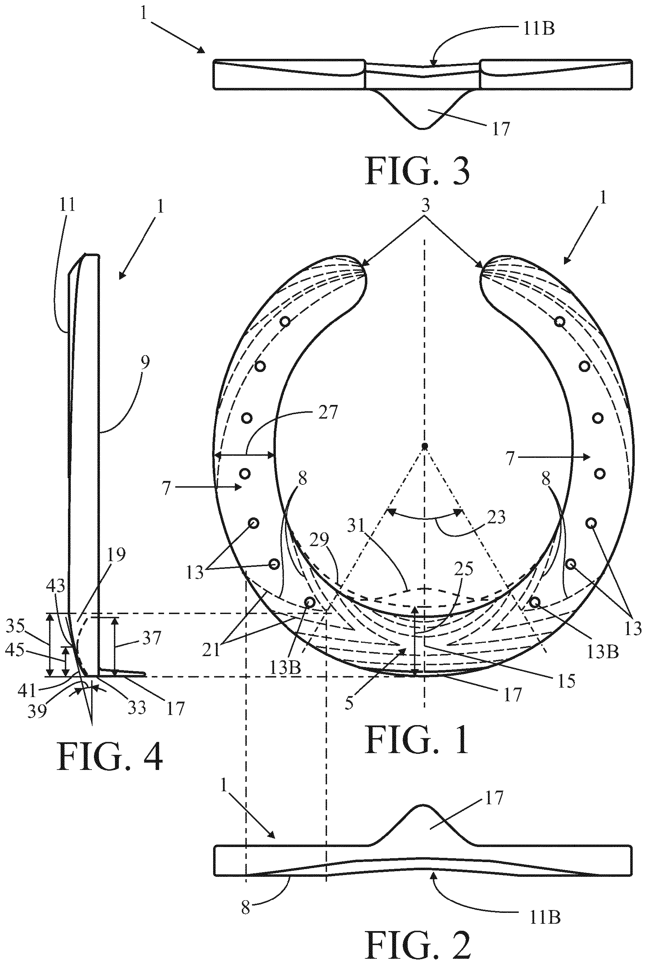

Figs. 1, 2, 3 and 4 show an embodiment of the horseshoe according to the invention to scale in plan view, front view, rear view and side view respectively. The shape and mutual proportions of the dimensions are shown as they are in real life. The horseshoe 1 comprises a C-shaped metal plate having two extreme ends 3 which are located at the rear side of the hoof during use, a middle segment 5 which is located at the front side of the hoof during use, and two side segments 7 located between the two extreme ends and the middle segment. The middle segment is thinner than the side segments and is defined as the part of the horseshoe that from the front side of the horseshoe onward has an increasing thickness and is bounded by the edge 8 of the side segments from the spot where the thickness no longer increases, but in this embodiment remains the same at first and then decreases toward the extreme ends.

The horseshoe further has a top side 9, see Fig. 4, with which the horseshoe is attached to the hoof during use, and a bottom side 11 which forms the bearing surface. The top side of the horseshoe extends in a planar surface without any curvature. The side segments 7, see Fig. 1, have holes 13 in them for horseshoe nails and in the middle 15 the horseshoe has an upright clip 17 at the front side.

In and near the middle 15 the middle segment 5 is thinner over its entire width than the side segments 7. This is clearly visible in Fig. 4 in which the shape of the middle of the middle segment is indicated by means of a broken line 19. This Figure further clearly shows that the cross section of the middle segment in and near the middle of the metal plate has a convex shape at the bottom side. Furthermore, in Fig. 1 is shown the variation in thickness of the horseshoe in broken lines 21, which indicate spots on the bottom side of the metal plate which have the same distance to the top side (worded differently, spots having the same thickness), where the middle of the side segments is thickest and the middle of the middle segment is thinnest.

These lines 21 also clarify that, seen in front view, the bottom side 11B of the middle segment 5 has a concave shape, which is clearly visible in Fig. 2. The thin portion extends from the middle 15 of the front side to both sides at an angle of approximately 30 degrees, see angle 23 in Fig. 1, which is approximately 60 degrees and is situated completely or substantially completely between the front holes 13B in the metal plate.

The width 25 of the middle segment 5 is preferably larger than the width 27 of the side segments 7, while the width from the side segments toward the middle gradually increases. Two possible shapes of the middle segment 5 having an enlarged width are shown by broken lines 29 and 31. In consequence, the surfaces of the cross sections of the middle segment and of the side segments are equally large.

From the middle of the front side 33 over a distance 35 that equals at least the width 37 of the horseshoe, the horseshoe is thinner than the adjoining side segments 7. Seen in side view the thickness of the horseshoe gradually increases from the front side 33 onward, so that the bottom side of the middle segment 5 forms a toe-off face over which the horseshoe toes off during walking.

Seen in side view, the bottom side of the middle segment 5 of the horseshoe has approximately or exactly the shape of an arc of circle where the angle 39 between the top side of the horseshoe and the tangent 41 at the bottom side at a spot 43 at a distance 45 from the front side 33 equals half the width 37 of the horseshoe in the place of the middle, is less than 30 degrees. In this embodiment this angle 39 is approximately 15 degrees. This angle determines whether the horse has a pleasant feeling of the horseshoe and the horse does not feel any pressure points underneath the hoof during running or walking.

Albeit the invention has been described in the foregoing with reference to the drawing Figures, it should be pointed out that the invention is not by any manner or means restricted to the embodiments shown in the drawings. The invention also extends over any embodiment deviating from the embodiments shown in the drawing Figures within the scope defined by the claims.

## Claims

1. Horseshoe (1) comprising a C-shaped metal plate having two extreme ends (3) which are located at the rear side of the hoof during use, as well as two side segments (7) extending from the extreme ends onward, and a middle segment (5) which is located between the two side segments at the front side of the hoof during use and from the side segments to the front side is thinner than the side segments, as well as a top side (9) with which the horseshoe is attached to a hoof during use and a bottom side (11) which forms the bearing surface, which top side is planar and which metal plate has a thickness as well as a width, where in and near the middle (15) the middle segment (5) over its full width is thinner than the side segments (7), wherein seen in side view, from the middle of the front side (33) over a distance (35), the horseshoe (1) has a convex shape at the bottom side (11), **characterized in that**, seen in side view, from the middle of the front side (33) over a distance (35) at least equal to the width (37) of the horseshoe, the horseshoe is thinner than the adjoining side segments (7), and **in that** the thickness gradually increases from the middle of the front side (33) onward.

2. Horseshoe (1) as claimed in claim 1, **characterized in that**, seen in side view, the bottom side of the middle segment (5) of the horseshoe has the shape of or substantially the shape of an arc of circle, where the angle (39) between the top side of the horseshoe and the tangent (41) at the bottom side at a spot (43) at a distance (45) from the front side (33) equaling half the width (37) of the horseshoe in the place of the middle, is less than 30 degrees.

3. Horseshoe (1) as claimed in claim 1 or 2, **characterized in that**, seen in front view, the bottom side (11B) of the middle segment (5) has a concave shape.

4. Horseshoe (1) as claimed in claim 1, 2 or 3, **characterized in that** the thin portion extends from the middle (15) of the front side to both extreme ends at an angle (23) of approximately 30 degrees.

5. Horseshoe (1) as claimed in any one of the previous claims, **characterized in that** the side segments (7) have holes (13) in them for horseshoe nails, where the middle segment (5) extends at least between the front holes present in the side segments.

6. Horseshoe (1) as claimed in any one of the previous claims, **characterized in that** the width (25) of the middle segment (5) exceeds the width (27) of the side segments (7).

7. Horseshoe (1) as claimed in claim 6, **characterized in that** the width gradually increases from the side segments (7) to the middle (15).

8. Horseshoe (1) as claimed in claim 6 or 7, **characterized in that** the surfaces of the cross sections of the middle segment (5) and of the side segments (7) are equally large or substantially equally large.

## Patentansprüche

1. Hufeisen (1) mit einem C-förmig gebogenen Eisen, das erstens mit zwei Enden (3) versehen ist, die sich bei Gebrauch an der hinteren Seite des Hufs befinden, das zweitens mit zwei von den Enden her sich erstreckenden Seitenteilen (7) versehen ist, das drittens mit einem zwischen den beiden Seitenteilen angeordneten Mittelteil (5) versehen ist, das sich bei Gebrauch an der vorderen Seite des Hufs befindet und im Bereich von den Seitenteilen bis zur Vorderkante dünner ist als die Seitenteile (7), das viertens eine Oberseite (9) aufweist, mit der das Hufeisen bei Gebrauch an einem Huf angebracht werden kann, und das fünftens eine Unterseite (11) besitzt, welche die Lauffläche bildet, wobei die besagte Oberseite eben ausgebildet ist und das besagte Eisen eine Dicke und eine Breite aufweist, wobei das Mittelteil (5) in und nahe der Mitte (15) auf der gesamten Breite dünner ist als die Seitenteile (7) und wobei das Hufeisen (1) in der Seitenansicht über einen Abstand (35), gemessen von der Mitte der Vorderkante (33), an der Unterseite (11) konvex ausgebildet ist, **dadurch gekennzeichnet, dass** das Hufeisen in der Seitenansicht, gemessen von der Mitte der Vorderkante (33) und über einen Abstand (35), der mindestens der Breite (37) des Hufeisens entspricht, dünner als die angrenzenden Seitenteile (7) ist und die Dicke, von der Mitte der Vorderkante (33) ausgehend, allmählich größer wird.

2. Hufeisen (1) nach Anspruch 1, **dadurch gekennzeichnet, dass** die Unterseite des Mittelteils (5) des Hufeisens in der Seitenansicht die Form oder annähernd die Form eines Kreisbogens besitzt, wobei der Winkel (39) zwischen der Oberseite des Hufeisens und der Tangente (41) an einem Punkt (43) an der Unterseite, der in einem Abstand (45) zur Vorderkante (33) gelegen ist, welcher der halben Breite (37) des Hufeisens im Bereich der Mitte entspricht, weniger als 30 Grad beträgt.

3. Hufeisen (1) nach einem der Ansprüche 1 oder 2, **dadurch gekennzeichnet, dass** die Unterseite (11B) des Mittelteils (5) in der Vorderansicht eine hohle Form aufweist.

4. Hufeisen (1) nach einem der Ansprüche 1, 2 oder 3, **dadurch gekennzeichnet, dass** sich der dünne Bereich von der Mitte (15) der Vorderkante auf beiden Seiten über einen Winkel (23) von ungefähr 30 Grad erstreckt.

5. Hufeisen (1) nach einem der vorangegangenen Ansprüche, **dadurch gekennzeichnet, dass** sich in den Seitenteilen (7) Löcher (13) für die Hufnägel befinden, wobei sich das Mittelteil (5) mindestens zwischen den in den Seitenteilen vorhandenen vorderen Löchern erstreckt.

6. Hufeisen (1) nach einem der vorangegangenen Ansprüche, **dadurch gekennzeichnet, dass** die Breite (25) des Mittelteils (5) größer ist als die Breite (27) der Seitenteile (7).

7. Hufeisen (1) nach Anspruch 6, **dadurch gekennzeichnet, dass** die Breite von den Seitenteilen (7) zur Mitte (15) hin allmählich größer wird.

8. Hufeisen (1) nach einem der Ansprüche 6 oder 7, **dadurch gekennzeichnet, dass** die Querschnittsflächen des Mittelteils (5) und der Seitenteile (7) gleich groß oder nahezu gleich groß sind.

## Revendications

1. Fer à cheval (1) ayant un fer en forme de C comprenant deux extrémités (3) qui pendant l'utilisation se trouvent à l'arrière du sabot, ainsi que deux parties latérales (7) s'étendant depuis les extrémités et une partie médiane (5) se trouvant entre les deux parties latérales et se trouvant à l'avant du sabot pendant l'utilisation, et étant, depuis les parties latérales jusqu'à l'avant, plus mince que les parties latérales (7), ainsi qu'une partie supérieure (9) destinée pendant l'utilisation à être fixée sur un sabot et une partie inférieure (11) en contact avec le sol, laquelle partie supérieure est plane, et lequel fer a une épaisseur ainsi qu'une largeur, où, en son milieu (15) et proche de son milieu (15), la partie médiane (5) est plus mince que les parties latérales (7) sur toute la largeur, où le fer à cheval (1), vu de profil, a une forme convexe depuis le milieu de l'avant (33) sur une distance (35) sur la partie inférieure (11), **caractérisé en ce que**, vu de profil et depuis le milieu de l'avant (33) sur une distance (35) au moins égale à la largeur (37) du fer à cheval, le fer à cheval est plus mince que les parties latérales (7) adjacentes, et **en ce que** depuis le milieu de l'avant (33) l'épaisseur augmente progressivement.

2. Fer à cheval (1) selon la revendication 1, **caractérisé en ce que**, vue de profil, la partie inférieure de la partie médiane (5) du fer à cheval a la forme ou pratiquement la forme d'un arc de cercle, où l'angle (39) entre la partie supérieure du fer à cheval et la tangente (41) sur la partie inférieure en un point (43) se trouvant à une distance (45), depuis l'avant (33), égale à la moitié de la largeur (37) du fer à cheval au niveau du milieu, est plus petit que 30 degrés.

3. Fer à cheval (1) selon la revendication 1 ou 2, **caractérisé en ce que**, vue de face, la partie inférieure (11B) de la partie médiane (5) a une forme creuse.

4. Fer à cheval (1) selon la revendication 1, 2 ou 3, **caractérisé en ce que** la partie mince s'étend depuis le milieu (15) de l'avant vers les deux côtés sur un angle (23) d'environ 30 degrés.

5. Fer à cheval (1) selon une des revendications précédentes, **caractérisé en ce que** dans les parties latérales (7) se trouvent des trous (13) pour des clous à ferrer, où la partie médiane (5) s'étend au moins entre les premiers trous se trouvant dans les parties latérales.

6. Fer à cheval (1) selon une des revendications précédentes, **caractérisé en ce que** la largeur (25) de la partie médiane (5) est plus grande que la largeur (27) des parties latérales (7).

7. Fer à cheval (1) selon la revendication 6, **caractérisé en ce que** la largeur depuis les parties latérales (7) vers le milieu (15) augmente progressivement.

8. Fer à cheval (1) selon la revendication 6 ou 7, **caractérisé en ce que** les surfaces des sections transversales de la partie médiane (5) et des parties latérales (7) sont aussi grandes ou pratiquement aussi grandes.
